# EUROPÄISCHE PATENTSCHRIFT

(11) **EP 3 170 661 B1**
(45) Veröffentlichungstag und Bekanntmachung des Hinweises auf die Patenterteilung: **22.08.2018**
(21) Anmeldenummer: 16002264.6
(22) Anmeldetag: 24.10.2016
(51) Int. Cl.: B32B 37/12, F28F 3/12, B32B 38/06

(54) **NIEDERDRUCK-DÜNNWANDWÄRMETAUSCHER UND VERFAHREN ZUR HERSTELLUNG EINES SOLCHEN**
LOW PRESSURE THIN WALL HEAT EXCHANGER AND METHOD FOR PRODUCING SAME
ÉCHANGEUR THERMIQUE À PAROI MINCE BASSE PRESSION ET SON PROCÉDÉ DE FABRICATION

(30) Priorität: 19.11.2015 DE 102015015015
(43) Veröffentlichungstag der Anmeldung: 24.05.2017
(73) Patentinhaber: Aluminium Féron GmbH & Co. KG, 52355 Düren (DE)
(72) Erfinder: FERON Berthold, 52372 Kreuzau Bergheim (DE); BRANDENBURG Marc Dr., 52385 Nideggen (DE)
(74) Vertreter: Hauck Patentanwaltspartnerschaft mbB

(56) Entgegenhaltungen:
- EP-A2- 1 811 245
- DE-A1- 2 620 465
- DE-A1-102012 012 711

## Beschreibung

Die vorliegende Erfindung betrifft einen Niederdruck-Dünnwandwärmetauscher mit einer ersten dünnen Decklage aus Metall, insbesondere Aluminium, einer zweiten dünnen Decklage aus Metall, insbesondere Aluminium, oder Kunststoff und einer diese verbindenden Verbindungsschicht zwischen den beiden Decklagen, die ein Polymer enthält, wobei mindestens eine Decklage einen Hohlraum oder ein Kanalsystem zur Aufnahme eines Wärmeaustauschmedium aufweist. Die Erfindung bezieht sich ferner auf ein Verfahren zur Herstellung eines Niederdruck-Dünnwandwärmetauschers.

Derartige Wärmetauscher sind bekannt. Sie werden hergestellt, indem die beiden Decklagen über verschiedene Verbindungsverfahren miteinander verbunden werden, beispielsweise durch Verlöten, Verkleben oder Verschweißen. Im Allgemeinen sind diese Verfahren recht aufwendig, und die hiermit hergestellten Wärmetauscher lassen hinsichtlich der Dauerbeständigkeit bzw. Dauerfestigkeit Wünsche offen.

Aus der DE-A-26 20 465 ist eine Einrichtung zum Aufnehmen und Weiterleiten von Sonnenenergiewärme bekannt, die einem derartigen Niederdruck-Dünnwandwärmetauscher entspricht. Zur Herstellung eines derartigen Wärmetauschers kann eine erste Decklage, bei der es sich um eine Aluminiumlage handeln kann, mit einer zweiten Decklage über eine siegelbare Schicht verbunden werden, die sich auf einer Seite der ersten Decklage befindet. Die beschichtete Decklage sowie die zweite Decklage, in die ein Kanalsystem eingeprägt ist, werden dann miteinander versiegelt.

Aus der DE 10 2012 012 711 A1 ist ein Niederdruck-Dünnwandwärmetauscher bekannt, der die Merkmale des Oberbegriffes von Patentanspruch 1 aufweist. Bei diesem Wärmetauscher findet eine Verbindungsschicht zwischen den beiden Decklagen aus einem siegelfähigen Polymer Verwendung, bei dem es sich beispielsweise um Polypropylen, Polyamid, PC oder Kombinationen hiervon handeln kann. Dabei kann die Verbindungsschicht als Polymerbeschichtung auf eine Decklage aufgebracht oder als getrennte siegelfähige Lage eingesetzt werden.

Aus der EP 1 811 245 A2 ist ein modularer Sonnenkollektor bekannt, der ein Absorberblech und ein unteres Blech aufweist, welche über Verbindungsstellen stoffschlüssig, beispielsweise durch eine Lötnaht, verbunden sind. Die Verbindungsstellen zwischen dem Absorberblech und dem unteren Blech werden hierbei durch ein metallisches Lot gebildet, so dass die Verbindungsstellen zur Wärmeübertragung an das untere Blech und damit an das Wärmeleitmedium beitragen.

Auch dieser bekannte Dünnwandwärmetauscher weist in Bezug auf seine Dauerbeständigkeit bzw. Dauerfestigkeit keine optimalen Eigenschaften auf, da die für die siegelfähige Verbindungsschicht verwendeten thermoplastischen Polymere mit der Zeit auskristallisieren und dadurch spröde werden, wodurch das Haftungsvermögen zu den beiden Decklagen in Mitleidenschaft gezogen wird.

Der vorliegenden Erfindung liegt die Aufgabe zugrunde, einen Niederdruck-Dünnwandwärmetauscher der eingangs beschriebenen Art zu schaffen, der sich im Betrieb durch eine besonders hohe Dauerbeständigkeit bzw. Dauerfestigkeit auszeichnet.

Diese Aufgabe wird erfindungsgemäß bei einem Niederdruck-Dünnwandwärmetauscher der angegebenen Art dadurch gelöst, dass die Verbindungsschicht ein dreidimensional vernetztes thermoplastisches Polymer enthält.

Während beim vorstehend beschriebenen Stand der Technik ein Polymer für die Verbindungsschicht Verwendung findet, das in Bezug auf eine oder beide Decklagen siegelfähig ist, umfasst bei der erfindungsgemäßen Lösung die Verbindungsschicht ein spezielles thermoplastisches Polymer, das beim Aushärten dreidimensional vernetzt und wegen der dreidimensionalen Vernetzung duroplastische Eigenschaften erhält. Die ausgehärtete dreidimensional vernetzte Verbindungsschicht geht ohne weitere Schichten, beispielsweise einer zusätzlichen Kleberschicht oder Haftvermittlungsschicht, eine feste stoffschlüssige Verbindung mit den verwendeten Decklagen ein, insbesondere mit den hierfür eingesetzten Metalllagen. So haben sich insbesondere in Bezug auf Decklagen aus Aluminium sehr gute Haftungseigenschaften ergeben, die sich insbesondere auch bei einer entsprechenden Dauerbeanspruchung nicht wesentlich verschlechtern.

Bei einer Ausführungsform des erfindungsgemäßen Dünnwandwärmetauschers kommt als Ausgangsmaterial für die Verbindungsschicht eine Heißschmelzklebefolie zur Anwendung, die im Endprodukt nach einem entsprechenden Laminierungsschritt zu einer dreidimensional vernetzten Zwischenlage mit duroplastischen Eigenschaften führt, wobei diese Zwischenlage durch das Laminieren mit den Decklagen eine stoffschlüssige feste Verbindung mit diesen eingeht.

Besonders gute Ergebnisse wurden mit einer Ausführungsform erzielt, bei der das dreidimensional vernetzte thermoplastische Polymer ein TPO (thermoplastisches Polyolefin (Elastomer)) umfasst. Derartige Substanzen führen zu einer zumindest teilweise dreidimensional vernetzten Verbindungsschicht.

Bei dem erfindungsgemäß ausgebildeten Niederdruck-Dünnwandwärmetauscher können die vorgesehenen Hohlräume oder Kanalsysteme in einer Decklage oder in beiden Decklagen vorgesehen sein. Es kann daher eine ebene Decklage mit einer strukturierten Decklage Verwendung finden. Es können aber auch zwei strukturierte Decklagen eingesetzt werden, die zusammen beispielsweise einen gemeinsamen Hohlraum bzw. ein gemeinsames Kanalsystem bilden. Der Hohlraum oder das Kanalsystem ist vorzugsweise in die mindestens eine Decklage eingeprägt.

Bei einer weiteren Ausführungsform ist der Hohlraum oder das Kanalsystem durch Aufweitung mittels Druckbeaufschlagung, beispielsweise mittels Druckluft, gebildet.

Der erfindungsgemäß ausgebildete Niederdruck-Dünnwandwärmetauscher kann aus der ersten und zweiten Decklage sowie der Verbindungsschicht bestehen, d.h. es können keine weiteren Materialschichten bzw. Materiallagen vorhanden sein. Natürlich können aber auch auf den Außenseiten der Decklagen andere Materialschichten vorgesehen sein, beispielsweise Schutzschichten zu beliebigen Zwecken.

Der erfindungsgemäß ausgebildete Niederdruck-Dünnwandwärmetauscher kann aber auch Teil einer größeren Einheit sein, beispielsweise eines Photovoltaikmoduls. Hierbei kann es sich beispielsweise bei der zweiten dünnen Decklage um ein Teil dieser größeren Einheit handeln, beispielsweise um eine Lage, ein Blech, eine Platte der größeren Einheit. Bei der Herstellung der größeren Einheit kann daher der Niederdruck-Dünnwandwärmetauscher als integriertes Teil dieser Einheit mit hergestellt werden, beispielsweise in einem einzigen Laminierschritt.

So kann beispielsweise bei einem Photovoltaikmodul, das sich aus einer Deckschicht, einer Bettungsschicht, in die die Photozellen eingebettet sind, und einem Backsheet zusammensetzt, unterhalb des Backsheets als weitere Schicht ein Niederdruck-Dünnwandwärmetauscher der hier beschriebenen Art angeordnet sein, der zur Wärmerückgewinnung eingesetzt wird, wobei die rückgewonnene Wärme über das den Wärmetauscher durchströmende Wärmeaustauschmedium abgeführt werden kann. Der Niederdruck-Dünnwandwärmetauscher kann dann beispielsweise mit dem Backsheet des Photovoltaikmoduls verklebt sein.

Die vorliegende Erfindung betrifft ferner ein Verfahren zur Herstellung eines Niederdruck-Dünnwandwärmetauschers mit einer ersten dünnen Decklage aus Metall, insbesondere Aluminium, einer zweiten dünnen Decklage aus Metall, insbesondere Aluminium, oder Kunststoff und einer diese verbindenden Verbindungsschicht zwischen den beiden Decklagen, die ein Polymer enthält, wobei mindestens eine Decklage einen Hohlraum oder ein Kanalsystem zur Aufnahme eines Wärmeaustauschmediums aufweist.

Das Verfahren umfasst erfindungsgemäß die folgenden Schritte:
Verwenden einer von der ersten Decklage und der zweiten Decklage getrennten Zwischenlage für die Verbindungsschicht, die ein dreidimensional vernetzendes thermoplastisches Polymer enthält; und
Laminieren der drei Lagen miteinander über einen ausreichenden Zeitraum zur Ausbildung eines dreidimensionalen Netzwerkes in der Verbindungsschicht und zur Herstellung einer formschlüssigen Verbindung zwischen Verbindungsschicht und Decklagen.

Mit dem erfindungsgemäßen Verfahren kann ein Wärmetauscher aus dünnen Materialien in einem einfachen und kostengünstigen Laminierprozess hergestellt werden. Insbesondere kann in einem einzigen Laminierschritt ein fertiger Wärmetauscher produziert werden, ohne dass aufwendige weitere Verfahrensschritte angewendet werden müssen.

Bei dem erfindungsgemäßen Verfahren findet zusätzlich zu den beiden Decklagen eine separate Zwischenlage Verwendung, die im Laminierprozess zwischen den beiden Decklagen angeordnet wird und insbesondere durch einen Laminierprozess bei einer Temperatur zwischen 90 °C und 200 °C, üblichen Drücken und über einen Zeitraum von 5-30 min zu einer dreidimensional vernetzten Zwischenlage mit duroplastischen Eigenschaften aushärtet, die mit den Decklagen eine feste stoffschlüssige Verbindung eingeht. Die Zwischenlage wird daher nicht nur mit den Decklagen versiegelt bzw. verklebt, wobei dieser Vorgang im Sekundenbereich abläuft, sondern es wird ein Vernetzungsprozess initiiert, für den ein wesentlich längerer Zeitraum (im Minutenbereich) benötigt wird. Als Zwischenlage wird dabei beispielsweise eine das thermoplastische Polymer enthaltende Heißschmelzklebefolie verwendet, mit der der dreidimensionale Vernetzungsprozess initiiert wird.

Geeignete Substanzen zur Ausbildung eines derartigen dreidimensionalen Netzwerkes sind die vorstehend erwähnten TPO. Bei dem erfindungsgemäßen Verfahren wird der Hohlraum oder das Kanalsystem in der mindestens einen Decklage vor oder während des Laminierprozesses ausgebildet. Beispielsweise kann dies über einen Prägeprozess erfolgen.

Das erfindungsgemäße Verfahren kann zur Herstellung eines nur aus drei Lagen bestehenden Wärmetauschers eingesetzt werden, aber auch als Teil eines Gesamtprozesses zur Herstellung einer größeren Einheit, beispielsweise eines Photovoltaikmoduls, verwendet werden. Hierbei kann die gesamte Einheit, beispielsweise der Photovoltaikmodul, einschließlich des Dünnwandwärmetauschers in einem einzigen Laminierschritt hergestellt werden. Bei einer anderen Lösung wird der erfindungsgemäß ausgebildete Dünnwandwärmetauscher separat von der anderen Einheit hergestellt und mit dieser dann zusammengefügt. Dies kann beispielsweise über einen Klebevorgang erfolgen. So kann der Dünnwandwärmetauscher beispielsweise mit dem Backsheet des Photovoltaikmoduls verklebt werden.

Wie bereits erwähnt, findet das Laminieren zur Herstellung des erfindungsgemäß ausgebildeten Dünnwandwärmetauschers vorzugsweise bei einer Temperatur zwischen 90 °C und 200 °C und üblichen Drücken statt.

Es versteht sich, dass die Innen- und/oder Außenseiten der Decklagen mit Zusatzschichten, insbesondere Haftverbesserungsschichten und/oder Schutzschichten, versehen werden können. Das erfindungsgemäße Verfahren kann daher durch die Aufbringung von derartigen Schichten ergänzt werden.

Für eine Decklage oder beide Decklagen wird vorzugsweise ein Aluminiumband mit einer Dicke zwischen 0,05 mm und 1,5 mm, vorzugsweise einer Dicke von 0,2 mm, eingesetzt. Die vorzugsweise verwendeten Heißschmelzklebefolien besitzen insbesondere eine Dicke zwischen 0,01 mm und 0,3 mm.

Die Erfindung wird nachfolgend anhand eines Ausführungsbeispieles in Verbindung mit der Zeichnung im Einzelnen erläutert. Es zeigen:
- Figur 1: eine Draufsicht, teilweise geschnitten, einer Ausführungsform eines Niederdruck-Dünnwandwärmetauschers; und
- Figur 2: einen vergrößerten Teilvertikalschnitt gemäß Linie A-A in Figur 1.

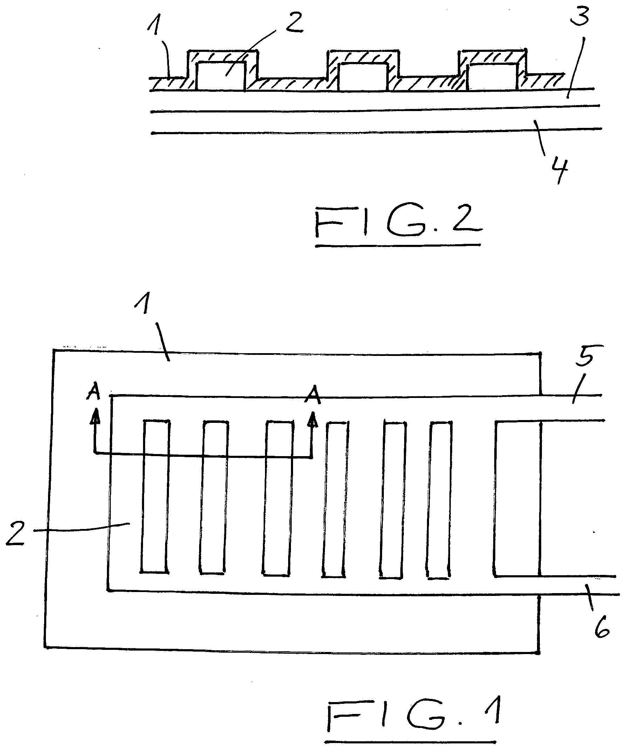

Figur 1 zeigt eine Ausführungsform eines Niederdruck-Dünnwandwärmetauschers 1 mit einem Kanalsystem 2. Der Niederdruckwärmetauscher weist einen Zulauf 5 und einen Ablauf 6 auf. Das Kanalsystem kann von einem entsprechenden Wärmeträger durchflossen werden.

Figur 2 zeigt den Aufbau des Wärmetauschers im Einzelnen. In eine erste Decklage 1 aus Aluminium ist das Kanalsystem 2 eingeprägt. Eine Verbindungsschicht 3, die ein dreidimensional vernetztes thermoplastisches Polymer enthält, verbindet die erste Decklage 1 mit einer zweiten Decklage 4, die ebenfalls aus Aluminium besteht. Die Verbindungsschicht 3 sorgt für eine formschlüssige Verbindung zwischen beiden Decklagen. Da das verwendete Polymer im ausgehärteten Zustand ein dreidimensionales Netzwerk aufbaut, wird eine hervorragende Haftung zu den beiden metallischen Decklagen erreicht, so dass der Wärmetauscher eine hohe Dauerbeständigkeit bzw. Dauerfestigkeit besitzt.

In der Anwendung des Wärmetauschers bei einem Photovoltaikmodul kann das Modul beispielsweise folgenden Aufbau besitzen: Glas, Einbettungsmaterial, Zelle, Einbettungsmaterial, Zwischensheet, TPO, Alufolie, TPO, Alufolie mit Kanalsystem.

## Patentansprüche

1. Niederdruck-Dünnwandwärmetauscher mit einer ersten dünnen Decklage (1) aus Metall, insbesondere Aluminium, einer zweiten dünnen Decklage(4) aus Metall, insbesondere Aluminium, oder Kunststoff und einer diese verbindenden Verbindungsschicht (3) zwischen den beiden Decklagen (1, 4), die ein Polymer enthält, wobei mindestens eine Decklage (1) einen Hohlraum oder ein Kanalsystem (2) zur Aufnahme eines Wärmeaustauschmediums aufweist, **dadurch gekennzeichnet, dass** die Verbindungsschicht (3) ein dreidimensional vernetztes thermoplastisches Polymer enthält.

2. Niederdruck-Dünnwandwärmetauscher nach Anspruch 1, **dadurch gekennzeichnet, dass** das Ausgangsmaterial für die Verbindungsschicht (3) eine Heißschmelzklebefolie ist.

3. Niederdruck-Dünnwandwärmetauscher nach Anspruch 1 oder 2, **dadurch gekennzeichnet, dass** das dreidimensional vernetzte thermoplastische Polymer ein TPO umfasst.

4. Niederdruck-Dünnwandwärmetauscher nach einem der vorangehenden Ansprüche, **dadurch gekennzeichnet, dass** mindestens eine Decklage (1) einen eingeprägten Hohlraum oder ein eingeprägtes Kanalsystem besitzt.

5. Niederdruck-Dünnwandwärmetauscher nach einem der vorangehenden Ansprüche, **dadurch gekennzeichnet, dass** der Hohlraum oder das Kanalsystem durch Aufweitung mittels Druckbeaufschlagung gebildet ist.

6. Niederdruck-Dünnwandwärmetauscher nach einem der vorangehenden Ansprüche, **dadurch gekennzeichnet, dass** er einen Teil einer größeren Einheit bildet.

7. Niederdruck-Dünnwandwärmetauscher nach Anspruch 6, **dadurch gekennzeichnet, dass** er einen Teil eines Photovoltaikmoduls bildet und unter dessen Backsheet zur Wärmerückgewinnung angeordnet ist.

8. Verfahren zur Herstellung eines Niederdruck-Dünnwandwärmetauschers mit einer ersten dünnen Decklage (1) aus Metall, insbesondere Aluminium, einer zweiten dünnen Decklage (4) aus Metall, insbesondere Aluminium, oder Kunststoff und einer diese verbindenden Verbindungsschicht (3) zwischen den beiden Decklagen (1, 4), die ein Polymer enthält, wobei mindestens eine Decklage (1) einen Hohlraum oder ein Kanalsystem zur Aufnahme eines Wärmeaustauschmediums aufweist, mit den folgenden Schritten:
Verwenden einer von der ersten Decklage (1) und der zweiten Decklage (4) getrennten Zwischenlage für die Verbindungsschicht (3), die ein dreidimensional vernetzendes thermoplastisches Polymer enthält; und
Laminieren der drei Lagen (1, 3, 4) miteinander über einen ausreichenden Zeitraum zur Ausbildung eines dreidimensionalen Netzwerkes in der Verbindungsschicht (3) und zur Herstellung einer formschlüssigen Verbindung zwischen Verbindungsschicht (3) und Decklagen (1, 4).

9. Verfahren nach Anspruch 8 **dadurch gekennzeichnet, dass** als Zwischenlage eine das thermoplastische Polymer enthaltende Heißschmelzklebefolie verwendet wird.

10. Verfahren nach Anspruch 8 oder 9, **dadurch gekennzeichnet, dass** eine unvernetztes TPO enthaltende Zwischenlage verwendet wird.

11. Verfahren nach einem der Ansprüche 8 bis 10, **dadurch gekennzeichnet, dass** der Hohlraum oder das Kanalsystem in der mindestens einen Decklage (1) vor oder während des Laminierprozesses ausgebildet wird.

12. Verfahren nach einem der Ansprüche 8 bis 11, **dadurch gekennzeichnet, dass** es als Teil eines Gesamtprozesses zur Herstellung einer größeren Einheit, insbesondere eines Photovoltaikmoduls, eingesetzt wird.

13. Verfahren nach einem der Ansprüche 8 bis 12, **dadurch gekennzeichnet, dass** das Laminieren bei einer Temperatur zwischen 90 °C und 200 °C über einen Zeitraum von 5-30 min erfolgt.

14. Verfahren nach einem der Ansprüche 8 bis 13, **dadurch gekennzeichnet, dass** die Innen- und/oder Außenseiten der Decklagen (1, 4) mit einer Zusatzschicht, insbesondere Haftverbesserungsschicht und/oder Schutzschicht, versehen werden.

## Claims

1. Low pressure thin wall heat exchanger comprising a first thin cover layer (1) of metal, especially aluminum, a second thin cover layer (4) of metal, especially aluminum, or plastic and a connection layer (3) connecting the same between the two cover layers (1,4) which contains a polymer wherein at least one cover layer (1) has a cavity or a channel system (2) for taking up a heat exchange medium, **characterised in that** the connection layer (3) contains a three-dimensionally cross-linked thermoplastic polymer.

2. The low pressure thin wall heat exchanger according to claim 1, **characterised in that** the starting material for the connection layer (3) is a hot-melt adhesive foil.

3. The low pressure thin wall heat exchanger according to claim 1 or 2, **characterised in that** the three-dimensionally cross-linked thermoplastic polymer includes a TPO.

4. The low pressure thin wall heat exchanger according to one of the preceding claims, **characterised in that** at least one cover layer (1) has an engraved cavity or an engraved channel system.

5. The low pressure thin wall heat exchanger according to one of the preceding claims, **characterised in that** the cavity or the channel system is formed by expansion by means of pressure application.

6. The low pressure thin wall heat exchanger according to one of the preceding claims, **characterised in that** it forms a part of a larger unit.

7. The low pressure thin wall heat exchanger according to claim 6, **characterised in that** it forms a part of a photovoltaic module and is arranged under its backsheet for heat recovery.

8. A method of producing a low pressure thin wall heat exchanger comprising a first thin cover layer (1) of metal, especially aluminum, a second thin cover layer (4) of metal, especially aluminum, or plastic and a connection layer (3) connecting the same between the two cover layers (1,4) which contains a polymer wherein at least one cover layer (1) has a cavity or a channel system for taking up a heat exchange medium, said method comprising the following steps:
using an intermediate layer separated from the first cover layer (1) and the second cover layer (4) for the connection layer (3) which contains a three-dimensionally cross-linked thermoplastic polymer; and
laminating the three layers (1,3,4) with one another through a sufficient period of time for the formation of a three-dimensional network in the connection layer (3) and for the production of a positive connection between connection layer (3) and cover layers (1,4).

9. The method according to claim 8, **characterised in that** a hot-melt adhesive foil containing the thermoplastic polymer is used as intermediate layer.

10. The method according to claim 8 or 9, **characterised in that** an intermediate layer containing non cross-linked TPO is used.

11. The method according to one of the claims 8 to 10, **characterised in that** the cavity or the channel system in the at least one cover layer (1) is formed prior to or during the lamination process.

12. The method according to one of the claims 8 to 11, **characterised in that** it is used as part of a total process for the production of a larger unit, especially a photovoltaic module.

13. The method according to one of the claims 8 to 12, **characterised in that** the lamination is done at a temperature between 90°C and 200°C through a period of time of 5 - 30 min.

14. The method according to one of the claims 8 to 13, **characterised in that** the inner and/or outer sides of the cover layers (1,4) are provided with an additional layer, especially bonding improving layer and/or protection layer.

## Revendications

1. Echangeur de chaleur à paroi mince à basse pression, avec une première strate de recouvrement (1) mince composée de métal, en particulier d'aluminium, une deuxième strate de recouvrement (4) mince composée de métal, en particulier d'aluminium, ou de matière plastique, et une couche de liaison (3) reliant ces deux dernières entre les deux strates de recouvrement (1, 4), qui contient un polymère, dans lequel au moins une strate de recouvrement (1) présente un espace creux ou un système de canaux (2) servant à recevoir un milieu d'échange thermique, **caractérisé en ce que** la couche de liaison (3) contient un polymère thermoplastique réticulé de manière tridimensionnelle.

2. Echangeur de chaleur à paroi mince à basse pression selon la revendication 1, **caractérisé en ce que** le matériau de départ pour la couche de liaison (3) est un film adhésif thermofusible.

3. Echangeur de chaleur à paroi mince à basse pression selon la revendication 1 ou 2, **caractérisé en ce que** le polymère thermoplastique réticulé de manière tridimensionnelle comprend un TPO.

4. Echangeur de chaleur à paroi mince à basse pression selon l'une quelconque des revendications précédentes, **caractérisé en ce qu'**au moins une strate de recouvrement (1) possède un espace creux estampé ou un système de canaux estampé.

5. Echangeur de chaleur à paroi mince à basse pression selon l'une quelconque des revendications précédentes, **caractérisé en ce que** l'espace creux ou le système de canaux est formé par élargissement au moyen d'une application de pression.

6. Echangeur de chaleur à paroi mince à basse pression selon l'une quelconque des revendications précédentes, **caractérisé en ce qu'**il forme une partie d'une unité plus grande.

7. Echangeur de chaleur à paroi mince à basse pression selon la revendication 6, **caractérisé en ce qu'**il forme une partie d'un module photovoltaïque et est disposé sous le panneau arrière de ce dernier aux fins de la récupération de chaleur.

8. Procédé servant à fabriquer un échangeur de chaleur à paroi mince à basse pression avec une première strate de recouvrement (1) mince composée de métal, en particulier d'aluminium, une deuxième strate de recouvrement (4) mince composée de métal, en particulier d'aluminium, ou de matière plastique, et une couche de liaison (3) reliant ces dernières entre les deux strates de recouvrement (1, 4), qui contient un polymère, dans lequel au moins une strate de recouvrement (1) présente un espace creux ou un système de canaux servant à recevoir un milieu d'échange thermique, avec les étapes suivantes :
d'utilisation d'une strate intermédiaire séparée de la première strate de recouvrement (1) et de la deuxième strate de recouvrement (4) pour la couche de liaison (3), qui contient un polymère thermoplastique à réticulation tridimensionnelle ; et
de laminage des trois couches (1, 3, 4) entre elles sur une durée suffisante pour réaliser un réseau tridimensionnel dans la couche de liaison (3) et pour fabriquer une liaison par complémentarité de forme entre la couche de liaison (3) et les strates de recouvrement (1, 4).

9. Procédé selon la revendication 8, **caractérisé en ce qu'**est utilisé en tant que strate intermédiaire un film adhésif thermofusible contenant le polymère thermoplastique.

10. Procédé selon la revendication 8 ou 9, **caractérisé en ce qu'**est utilisée une strate intermédiaire contenant un TPO non réticulé.

11. Procédé selon l'une quelconque des revendications 8 à 10, **caractérisé en ce que** l'espace creux ou le système de canaux est réalisé dans l'au moins une strate de recouvrement (1) avant ou pendant le processus de laminage.

12. Procédé selon l'une quelconque des revendications 8 à 11, **caractérisé en ce qu'**il est employé en tant que partie d'un processus global pour fabriquer une unité plus grande, en particulier un module photovoltaïque.

13. Procédé selon l'une quelconque des revendications 8 à 12, **caractérisé en ce que** le laminage est effectué à une température comprise entre 90 °C et 200 °C sur une durée de 5 à 30 min.

14. Procédé selon l'une quelconque des revendications 8 à 13, **caractérisé en ce que** les côtés intérieurs et/ou extérieurs des strates de recouvrement (1, 4) sont pourvus d'une couche supplémentaire, en particulier d'une couche d'amélioration de l'adhérence et/ou d'une couche de protection.
